# EUROPÄISCHE PATENTSCHRIFT

(11) **EP 3 846 960 B1**
(45) Veröffentlichungstag und Bekanntmachung des Hinweises auf die Patenterteilung: **11.05.2022**
(21) Anmeldenummer: 19762398.6
(22) Anmeldetag: 05.09.2019
(51) Int. Cl.: B23K 9/28, B23K 9/29, B23K 9/32

(54) **MIG/MAG-SCHWEISSBRENNERKÖRPER, WIG-SCHWEISSBRENNERKÖRPER, MIG/MAG-SCHWEISSBRENNERGRIFF UND MIG/MAG-SCHWEISSBRENNER MIT EINEM SOLCHEN MIG/MAG-SCHWEISSBRENNER- KÖRPER UND MIG/MAG-SCHWEISSBRENNERGRIFF**
TMIG/MAG WELDING TORCH BODY, TIG WELDING TORCH BODY, MIG/MAG WELDING TORCH HANDLE AND MIG/MAG WELDING TORCH WITH SUCH A WELDING TORCH BODY AND MIG/MAG WELDING TORCH HANDLE
CORPS DE CHALUMEAU DE SOUDURE MIG / MAG, CORPS DE CHALUMEAU DE SOUDURE TIG, POIGNÉE DE CHALUMEAU DE SOUDAGE MIG / MAG ET CHALUMEAU DE SOUDAGE MIG / MAG DOTÉ D'UN TEL CORPS DE CHALUMEAU DE SOUDAGE MIG / MAG ET D'UNE TELLE POIGNÉE DE CHALUMEAU DE SOUDAGE MIG / MAG

(30) Priorität: 06.09.2018 EP 18192965
(43) Veröffentlichungstag der Anmeldung: 14.07.2021
(73) Patentinhaber: FRONIUS INTERNATIONAL GmbH, 4643 Pettenbach (AT)
(72) Erfinder: PREUNDLER, David, 4643 Pettenbach (AT); OBERNDORFER, Klaus, 4643 Pettenbach (AT); PREUNDLER, Anton, 4643 Pettenbach (AT)
(74) Vertreter: SONN Patentanwälte OG
(86) Internationale Anmeldenummer: PCT/EP2019/073642
(87) Internationale Veröffentlichungsnummer: WO 2020/049076

(56) Entgegenhaltungen:
- WO-A1-2012/019208
- WO-A1-2013/142888
- WO-A2-2004/026518
- WO-A2-2013/142887

## Beschreibung

Die Erfindung betrifft einen MIG/MAG-Schweißbrennerkörper, mit einem Rohrbogen, einer Kontaktdüse zur Kontaktierung und Führung eines abschmelzenden Schweißdrahtes, einer Gasdüse und einem am Rohrbogen angeordneten im Wesentlichen zylinderförmigen Steckelement zur lösbaren Verbindung mit einem korrespondierenden Aufnahmeteil eines MIG/MAG-Schweißbrennergriffs, welches Steckelement eine Einlassöffnung für das Schutzgas und einen mit der Einlassöffnung verbundenen Gaskanal zur Führung des Schutzgases zur Gasdüse und gleichzeitig zur Führung des Schweißdrahtes aufweist und zur Übertragung eines Schweißstromes zur Kontaktdüse ausgebildet ist, wobei die Einlassöffnung im Wesentlichen zentral am distalen Ende des Steckelements angeordnet ist, wobei das Steckelement zur steckbaren Verbindung mit dem Aufnahmeteil des MIG/MAG-Schweißbrennergriffs ausgebildet ist und einen Brennerverschluss aufweist, welcher zur Fixierung am Aufnahmeteil des MIG/MAG-Schweißbrennergriffs vorzugsweise um 180° verdrehbar ausgebildet ist.

Weiters betrifft die Erfindung einen MIG/MAG-Schweißbrennergriff, mit einem Stromübertragungselement, einem zentralen Kanal, und einem Aufnahmeteil zur lösbaren Verbindung mit einem Steckelement eines MIG/MAG-Schweißbrennerkörpers.

Schließlich ist die Erfindung auf einen MIG/MAG-Schweißbrenner mit einem oben genannten MIG/MAG-Schweißbrennerkörper und einem oben genannten MIG/MAG-Schweißbrennergriff gerichtet.

Die Erfindung ist auch auf einen WIG (Wolfram-Inertgas)-Schweißbrennerkörper, mit einem Brennerhals, einem Elektrodenhalter zur Aufnahme einer nichtabschmelzenden Schweißelektrode, einer Gasdüse und einem im Brennerhals angeordneten im Wesentlichen zylinderförmigen Steckelement zur lösbaren Verbindung mit einem korrespondierenden Aufnahmeteil eines WIG-Schweißbrennergriffs, und mit einer Einrichtung zur Zuführung eines abschmelzenden Schweißdrahtes, welches Steckelement eine Einlassöffnung für das Schutzgas und einen mit der Einlassöffnung verbundenen Gaskanal zur Führung des Schutzgases zur Gasdüse und gleichzeitig zur Führung des Schweißdrahtes aufweist und zur Übertragung eines Schweißstromes zum Elektrodenhalter ausgebildet ist, wobei die Einlassöffnung im Wesentlichen zentral am distalen Ende des Steckelements angeordnet ist, wobei das Steckelement zur steckbaren Verbindung mit dem Aufnahmeteil des WIG-Schweißbrennergriffs ausgebildet ist und einen Brennerverschluss aufweist, welcher zur Fixierung am Aufnahmeteil des WIG-Schweißbrennergriffs vorzugsweise um 180° verdrehbar ausgebildet ist, anwendbar.

MIG (Metall-Inertgas)/MAG (Metall-Aktivgas)-Schweißbrenner mit einem abschmelzenden Schweißdraht bestehen aus einem Schweißbrennerkörper und einem Schweißbrennergriff, welcher mit einem Schlauchpaket, welches die einzelnen Leitungen für den Schweißstrom, das Schutzgas, den Schweißdraht und das allfällige Kühlmittel enthält, verbunden ist. Um Verschleißteile des Schweißbrenners austauschen zu können aber auch unterschiedliche Arten von Schweißbrennern verwenden zu können, ist der Schweißbrennerkörper häufig lösbar mit dem Schweißbrennergriff und das Schlauchpaket mit den entsprechenden Anschlüssen am Schweißbrennergriff verbunden. Bei der Verbindung zwischen Schweißbrennerkörper und Schweißbrennergriff sind Schraubverbindungen mit Hilfe einer Überwurfmutter sowie Steckverbindungen üblich.

Beispielsweise beschreibt die US 2016/0074973 A1 einen Schweißbrenner, bei dem der Brennerkörper mit dem Rohrbogen über eine Steckverbindung am Brennergriff montierbar ist, der wiederum mit dem Schlauchpaket verbindbar ist.

Auch die WO 2010/135752 A2 beschreibt einen MIG/MAG-Schweißbrenner mit modulartig aufgebauten Komponenten.

Die WO 2013/142887 A2 (Basis für den Oberbegriff der Ansprüche 2, 6 und 7) beschreibt einen gasgekühlten MIG/MAG-Schweißbrenner und die WO 2013/142888 A1 (Basis für den Oberbegriff des Anspruchs 1) einen wassergekühlten MIG/MAG-Schweißbrenner, die zur lösbaren Verbindung des Rohrbogens mit dem Brennergriff oder dem Schlauchpaket mit entsprechend gestalteten Stecker- und Buchsenteilen ausgestattet sind. Die Verbindungseinrichtung ermöglicht keine Verbindung eines gasgekühlten Rohrbogens mit einem wassergekühlten Schlauchpaket oder eines wassergekühlten Rohrbogens mit einem gasgekühlten Schlauchpaket.

Bei Schweißbrennern werden unterschiedlichste Arten, insbesondere solche mit ausschließlich einer Schutzgasleitung aber auch solche mit zusätzlichen Kühlmittelleitungen und ebenso verschiedene Schlauchpakete mit oder ohne Kühlmittelleitung unterschieden. Je nach Verwendung eines gasgekühlten oder wassergekühlten Schweißbrenners und das Vorhandensein eines Schlauchpakets mit oder ohne Kühlmittelleitungen, sind verschiedene Arten von Schweißbrennerkörpern und Schweißbrennergriffen notwendig, welche vom Schweißkomponenten-Hersteller produziert und vom Nutzer angeschafft und gelagert werden müssen. Dies erhöht den Herstellungsaufwand und somit auch die Herstellungs- und Anschaffungskosten.

Die Aufgabe der vorliegenden Erfindung besteht daher in der Schaffung eines oben genannten MIG/MAG-Schweißbrennerkörpers, MIG/MAG-Schweißbrennergriffs und MIG/MAG-Schweißbrenners, welche für sämtliche Varianten, insbesondere gasgekühlte Variante und wassergekühlte (bzw. Kühlmittel-gekühlte) Variante möglichst identisch aufgebaut sein sollen, sodass der Schweißkomponenten-Hersteller nicht für jede Variante eigene Komponenten herstellen muss und der Schweißer nicht für jede Variante an Schweißbrennern entsprechend viele Komponenten anschaffen und lagern muss. Insbesondere soll die vorliegende Erfindung eine Verbindung eines gas- bzw. wassergekühlten Schweißbrennerkörpers mit im Wesentlichen demselben Schweißbrennergriff und die Verbindung dieses Schweißbrennergriffs mit unterschiedlichen Schlauchpaketen (mit und ohne Kühlmittelleitungen) zulassen. Nachteile bekannter Konstruktionen sollen vermieden oder zumindest reduziert werden.

Die Aufgabe der Erfindung wird durch einen oben genannten MIG/ MAG-Schweißbrennerkörper gelöst, bei dem mantelseitig am Steckelement ein durch einen vom distalen Ende des Steckelements beabstandeten umlaufenden Kanal gebildeter Verbindungskanal angeordnet ist, der bei verbundenem MIG/MAG-Schweißbrennergriff zur Verbindung zweier mantelseitig im Aufnahmeteil des MIG/MAG-Schweißbrennergriffs angeordneter Mündungen von Kanälen zur Führung eines Kühlmittels ausgebildet ist. Dadurch wird eine rasche, einfache und vor allem werkzeuglose Befestigung und Lösung des Schweißbrennerkörpers am bzw. vom Schweißbrennergriff ermöglicht. Der Brennerverschluss kann verschiedenartig konstruiert werden, um die Fixierung durch eine axiale Bewegung und eine Verdrehung zu ermöglichen. Beispielsweise sind bajonettartige Verschlüsse denkbar. Dadurch, dass das Steckelement des Schweißbrennerkörpers, welcher zur Verbindung mit einem entsprechend gestalteten Aufnahmeteil am Schweißbrennergriff ausgebildet ist, einen Verbindungskanal zur Verbindung der Mündungen von Kanälen am Schweißbrennergriff aufweist, können mehr Optionen beim Anschließen des Schweißbrennerkörpers am Schweißbrennergriff geschaffen werden, je nachdem, ob der Schweißbrennerkörper gasgekühlt und wassergekühlt ausgeführt ist. Je nach Ausführungsvariante des Schweißbrennerkörpers können im Steckelement auch andere Kanäle oder dergl. vorgesehen sein, welche mit entsprechenden Kanälen im Schweißbrennergriff zusammenwirken, um einen gewünschten Verlauf des Schutzgases und allfälliger Kühlmittel und die Förderung des Schweißdrahtes durch die Kanäle erzielen zu können. Der Schweißbrennerkörper der gegenständlichen Art ist relativ einfach und kostengünstig herstellbar. Bei einem gasgekühlten MIG/MAG-Schweißbrennerkörper ist der Verbindungskanal am Steckelement durch einen vom distalen Ende des Steckelements beabstandeten umlaufenden Kanal gebildet.

Die Aufgabe der Erfindung wird auch durch einen oben genannten MIG/MAG-Schweißbrennerkörper gelöst, bei dem mantelseitig am Steckelement ein Verbindungskanal angeordnet ist, welcher Verbindungskanal durch einen Kanal zur Zuführung des Kühlmittels und einen Kanal zur Rückführung des Kühlmittels gebildet ist, wobei der Kanal zur Zuführung des Kühlmittels in einer mantelseitig am Steckelement angeordneten Einlassöffnung mündet und der Kanal zur Rückführung des Kühlmittels in einer mantelseitig am Steckelement angeordneten Rückführöffnung mündet, und welcher Verbindungskanal bei verbundenem MIG/MAG-Schweißbrennergriff zur Verbindung zweier mantelseitig im Aufnahmeteil des MIG/MAG-Schweißbrennergriffs angeordneter Mündungen von Kanälen zur Führung eines Kühlmittels ausgebildet ist. Bei einem wassergekühlten bzw.- Kühlmittel-gekühlten MIG/MAG-Schweißbrennerkörper ist der Verbindungskanal im Steckelement durch einen Kanal zur Zuführung des Kühlmittels und einen Kanal zur Rückführung des Kühlmittels gebildet, wobei der Kanal zur Zuführung des Kühlmittels in einer mantelseitig am Steckelement angeordneten Einlassöffnung mündet und der Kanal zur Rückführung des Kühlmittels in einer mantelseitig am Steckelement angeordneten Rückführöffnung mündet. Dadurch wird ein wassergekühlter MIG/MAG-Schweißbrennerkörper geschaffen, der mit einem entsprechenden MIG/MAG-Schweißbrennergriff einfach und rasch verbindbar ist und dessen Kanäle zur Führung des Schutzgases, des Schweißdrahtes und Kühlmittels je nach verwendetem Schlauchpaket (mit oder ohne Kühlmittelleitungen) entsprechend verbunden werden können. Obgleich meist Wasser als Kühlmittel verwendet wird, sind auch andere Kühlflüssigkeiten oder Kühlgase denkbar.

Vorteilhafterweise ist der Brennerverschluss um 180° verdrehbar ausgebildet.

Gemäß einem weiteren Merkmal der Erfindung ist der Brennerverschluss im Wesentlichen rohrförmig ausgebildet und weist dieser an der Außenseite Fixierelemente auf, welche mit komplementär gestalteten Fixierelementen am Aufnahmeteil des MIG/MAG-Schweißbrennergriffs zusammenwirken. Dies stellt eine einfache Realisierungsmöglichkeit für die Verbindung des MIG/MAG-Schweißbrennerkörpers mit dem MIG/MAG-Schweißbrennergriff durch eine kombinierte axiale und drehende Bewegung, vorzugsweise um 180 Grad dar. Die Fixierelemente können durch entsprechende Rastnasen und Führungsnuten oder dergleichen gebildet sein.

Das Steckelement - hier zumindest der stromführende Teil - ist vorzugsweise aus Metall, insbesondere Messing, und der Brennerverschluss aus Kunststoff gebildet. Derartige Materialien haben sich als besonders geeignet herausgestellt, da sie entsprechend leicht bearbeitbar sind und den beim Schweißen auftretenden Temperaturen standhalten. Zusätzlich können dadurch auch sicherheitsrelevante Funktionen, wie z.B. die Einhaltung von Kriechstrecken, erfüllt werden.

Gelöst wird die erfindungsgemäße Aufgabe auch durch einen oben genannten WIG-Schweißbrennerkörper, bei dem mantelseitig am Steckelement ein durch einen vom distalen Ende des Steckelements beabstandeten umlaufenden Kanal gebildeter Verbindungskanal angeordnet ist, oder der Verbindungskanal durch einen Kanal zur Zuführung des Kühlmittels und einen Kanal zur Rückführung des Kühlmittels gebildet ist, wobei der Kanal zur Zuführung des Kühlmittels in einer mantelseitig am Steckelement angeordneten Einlassöffnung mündet und der Kanal zur Rückführung des Kühlmittels in einer mantelseitig am Steckelement angeordneten Rückführöffnung mündet, und der Verbindungskanal bei verbundenem WIG-Schweißbrennergriff zur Verbindung zweier mantelseitig im Aufnahmeteil eines WIG-Schweißbrennergriffs angeordneter Mündungen von Kanälen zur Führung eines Kühlmittels ausgebildet ist. Der modulare und flexible Aufbau des Schweißbrenners ist auch bei einem WIG-Schweißbrenner mit abschmelzendem Zusatzmaterial bzw. Schweißdraht anwendbar. Zu den dadurch erzielten Vorteilen wird auf die obige Beschreibung des MIG/MAG-Schweißbrennerkörpers verwiesen.

Gelöst wird die erfindungsgemäße Aufgabe auch durch einen oben genannten MIG/MAG-Schweißbrennergriff, bei dem ein zum zentralen Kanal koaxial angeordneter zweiter Kanal und ein weiterer koaxial zum zweiten Kanal angeordneter dritter Kanal vorgesehen ist, wobei zwischen zweitem Kanal und drittem Kanal eine Verbindung vorgesehen ist, und der erste Kanal eine Mündung im Zentrum des Aufnahmeteils, der zweite Kanal eine Mündung mantelseitig des Aufnahmeteils und der dritte Kanal eine Mündung mantelseitig des Aufnahmeteils aufweist. Unter der koaxialen Anordnung wird eine Anordnung in verschiedenen Abständen von der Mittelachse des MIG/MAG-Schweißbrennergriffs verstanden. Die Kanäle können unterschiedlich realisiert werden, beispielsweise als bloße Bohrungen aber auch in Form von Ringräumen oder dergleichen. Durch die spezielle Anordnung insgesamt dreier Kanäle zur Führung des Schutzgases, des abschmelzenden Schweißdrahtes und bzw. oder eines Kühlmittels, insbesondere Wassers, wird je nach Anschluss der Leitungen und Schläuche des Schlauchpakets ein verschiedenartiges Durchströmen der Kanäle mit dem Schutzgas oder Kühlmittel und das Hindurchführen des abschmelzenden Schweißdrahtes ermöglicht. Schließlich mündet der Schweißdraht, das Schutzgas und Kühlmittel in den entsprechenden Kanälen im jeweiligen angeschlossenen MIG/MAG-Schweißbrennerkörper. Der erste Kanal weist eine Mündung im Zentrum des Aufnahmeteils, der zweite Kanal eine Mündung mantelseitig des Aufnahmeteils und der dritte Kanal eine Mündung mantelseitig des Aufnahmeteils auf. Durch eine derartige Anordnung der Mündungen der Kanäle innerhalb des Aufnahmeteils wird bei der Verbindung mit dem entsprechend gestalteten Steckelement des MIG/MAG-Schweißbrennerkörpers je nach verwendeten Schweißmedien (Schutzgas und allenfalls Kühlmittel) ein unterschiedlicher Verlauf des Schutzgases und des Kühlmittels erzielt und die Anwendung sowohl eines gasgekühlten Schweißbrennerkörpers als auch eines wassergekühlten Schweißbrennerkörpers am selben Schweißbrennergriff ermöglicht. Die mantelseitig am Aufnahmeteil angeordnete Mündung des dritten Kanals geht in den Verbindungskanal des Steckelements des Schweißbrennerkörpers über. Die Mündung des ersten Kanals im Aufnahmeteil korrespondiert bei angeschlossenem Schweißbrennerkörper mit dem Gaskanal im Steckelement des Schweißbrennerkörpers. Die Mündung des zweiten Kanals mantelseitig des Aufnahmeteils korrespondiert wiederum mit dem Verbindungskanal am Steckelement des Schweißbrennerkörpers. Am Ende des Schweißbrennergriffs, welches dem Schlauchpaket zugewandt ist, sind entsprechende Anschlüsse für den Schweißdraht bzw. die Drahtseele zur Führung des Schweißdrahtes, den Schweißstrom, das Schutzgas und das Kühlmittel vorgesehen, welche je nach verwendetem Schlauchpaket entsprechend angeschlossen werden. Somit wird mit der Herstellung eines im Wesentlichen gleichartig ausgebildeten Schweißbrennergriffs der Anschluss sowohl eines gasgekühlten als auch wassergekühlten Schweißbrennerkörpers und die Verbindung mit einem Schlauchpaket mit oder ohne Kühlmittelleitungen ermöglicht. Je nach gewünschter Kombination sind allenfalls Abdichtelemente zum Abdichten eines Kanals oder der Abdichtung von Bereichen zwischen Kanälen (z.B. mittels O-Ringe), usw. oder ähnliche Hilfsmittel erforderlich, welche weiter unten beschrieben werden.

Das Stromübertragungselement besteht vorzugsweise aus einer Hülse aus elektrisch leitfähigem Material mit axial angeordneten Schlitzen zur Bildung des zweiten Kanals und einer darüber angeordnetes Isolationselement aus elektrisch isolierendem Material. Über die Hülse aus elektrisch leitfähigem Material wird ein entsprechend guter elektrischer Kontakt zur Übertragung des Schweißstromes hergestellt.

Wenn zumindest ein Abdichtelement zum Abdichten zumindest eines Kanals vorgesehen ist, können in einfacher Weise die Bedingungen zum Anschließen des Schweißbrennergriffs an ein Schlauchpaket ohne Kühlmittelleitungen geschaffen werden. Somit kann der Schweißbrennergriff auch bloß zur Führung des Schweißdrahtes und zum Übertragen des Schutzgases verwendet werden, während die anderen Kanäle, welche zur Führung eines Kühlmittels dienen würden, durch entsprechende Abdichtelemente verschlossen werden.

Wenn gemäß einem weiteren Merkmal der Erfindung ein Rohr zum Einschieben in den dritten Kanal und gleichzeitigen Abdichten der Verbindung vorgesehen ist, kann eine weitere Veränderung des Verlaufs des Kühlmittels in den Kanälen des Schweißbrennergriffs für bestimmte Anwendungen in einfacher Weise erzielt werden.

Gemäß einem weiteren Merkmal der Erfindung weist der Aufnahmeteil an der Innenseite Fixierelemente auf, welche mit komplementär gestalteten Fixierelementen am Brennerverschluss des MIG/MAG-Schweißbrennerkörpers zusammenwirken. Wie bereits oben im Zusammenhang mit dem MIG/MAG-Schweißbrennerkörper erwähnt, können die Fixierelemente durch entsprechende Rastnasen und Führungsnuten oder dergl. gebildet sein, um die Fixierung des Schweißbrennerkörpers gegenüber dem Schweißbrennergriff durch eine kombinierte axiale Bewegung und Drehbewegung erzielen zu können. Auf diese Weise wird eine einfache, rasche und werkzeuglose Montage und Demontage des Schweißbrennerkörpers am und vom Schweißbrennergriff ermöglicht.

Um ein ungewolltes Lösen des Schweißbrennerkörpers vom Schweißbrennergriff zu verhindern oder zu erschweren, kann ein Entriegelungselement zum Entriegeln der Fixierung des Schweißbrennerkörpers am Schweißbrennergriff vorgesehen sein. Ein derartiges Entriegelungselement ist vorzugsweise durch einen federvorgespannten Betätigungsknopf gebildet, den der Schweißer vor dem Lösen des Schweißbrennerkörpers vom Schweißbrennergriff gegen die Federkraft drücken oder verschieben muss.

Im dritten Kanal des Schweißbrennergriffs kann ein Rückschlagventil angeordnet sein. Durch ein derartiges Rückschlagventil kann verhindert werden, dass Rückstände eines flüssigen Kühlmittels, insbesondere von Wasser, aus dem dritten Kanal in den Gaskanal des Schweißbrennerkörpers gelangt, was beim Schweißen zu einem Schweißqualitätsverlust führen könnte. Vor dem Rückschlagventil allenfalls vorhandene Wassertröpfchen und Rückstände des Kühlmittels werden üblicherweise vor Durchführung des Schweißverfahrens durch Ausblasen mit Druckluft entfernt.

Zur Betätigung des Schweißbrenners ist am Schweißbrennergriff ein Schalter, Taster oder dergl. Betätigungselement zum Ein- und Ausschalten des Schweißstromes angeordnet.

Die erfindungsgemäße Aufgabe wird auch durch einen oben genannten MIG/MAG-Schweißbrenner, mit einem oben genannten MIG/MAG-Schweißbrennerkörper und einem oben genannten MIG/MAG-Schweißbrennergriff gelöst. Zu den dadurch erzielbaren Vorteilen gegenüber bekannten Schweißbrennern, insbesondere die höhere Flexibilität bei der Kombination gasgekühlter Schweißkomponenten mit wassergekühlten Schweißkomponenten wird auf die obige Beschreibung des Schweißbrennerkörpers und Schweißbrennergriffs verwiesen.

Die Erfindung wird anhand der beigefügten Zeichnungen näher erläutert. Darin zeigen:
- Fig. 1: eine schematische Ansicht eines erfindungsgemäßen MIG/ MAG-Schweißbrenners;
- Fig. 2: eine schematische Ansicht eines Teils eines erfindungsgemäß ausgebildeten gasgekühlten MIG/MAG-Schweißbrennerkörpers;
- Fig. 3: eine schematische Ansicht eines Teils eines erfindungsgemäß ausgebildeten wassergekühlten MIG/MAG-Schweißbrennerkörpers;
- Fig. 4: eine schematische Ansicht eines erfindungsgemäß ausgebildeten MIG/MAG-Schweißbrennergriffs zur steckbaren Verbindung mit einem MIG-MAG-Schweißbrennerkörper gemäß Fig. 2 oder Fig. 3;
- Fig. 5: einen schematischen Verlauf des Schutzgases und des abschmelzenden Schweißdrahtes bei Verbindung eines gasgekühlten MIG/MAG-Schweißbrennerkörpers gemäß Fig. 2 mit dem MIG/MAG-Schweißbrennergriff gemäß Fig. 4 und einem gasgekühlten Schlauchpaket;
- Fig. 6: einen schematischen Verlauf des Schutzgases, des Schweißdrahtes und Kühlmittels bei Verbindung eines gasgekühlten MIG/MAG-Schweißbrennerkörpers gemäß Fig. 2 mit dem MIG/ MAG-Schweißbrennergriff gemäß Fig. 4 und einem wassergekühlten Schlauchpaket;
- Fig. 7: einen schematischen Verlauf des Schutzgases und Schweißdrahts bei Verbindung eines wassergekühlten MIG/MAG-Schweißbrennerkörpers gemäß Fig. 3 mit dem MIG/MAG-Schweißbrennergriff gemäß Fig. 4 und einem gasgekühlten Schlauchpaket;
- Fig. 8: einen schematischen Verlauf des Schutzgases, Schweißdrahtes und Kühlmittels bei Verbindung eines wassergekühlten MIG/MAG-Schweißbrennerkörpers gemäß Fig. 3 mit dem MIG/ MAG-Schweißbrennergriff gemäß Fig. 4 und einem wassergekühlten Schlauchpaket;
- Fig. 9: eine schematische Ansicht eines WIG-Schweißbrennerkörpers mit einer Zuführeinrichtung für einen abschmelzenden Schweißdraht unter Verwendung der erfindungsgemäßen Verbindungen zwischen Schweißbrennerkörper, Schweißbrennergriff und Schlauchpaket.

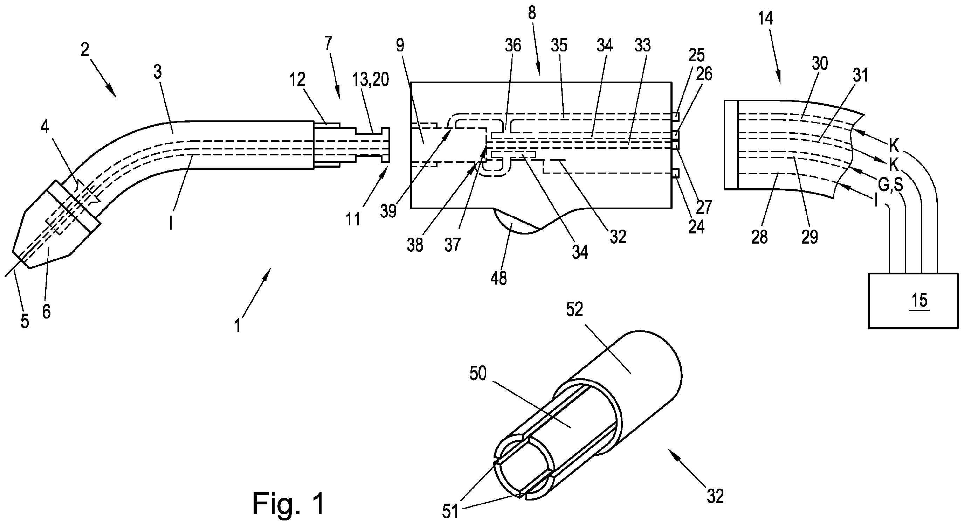

Fig. 1 zeigt eine schematische Ansicht eines MIG/MAG-Schweißbrenners 1. Der MIG/MAG-Schweißbrenner 1 besteht aus dem MIG/ MAG-Schweißbrennerkörper 2 und dem MIG/MAG-Schweißbrennergriff 8. Der MIG/MAG-Schweißbrennerkörper 2 ist lösbar, vorzugsweise werkzeuglos lösbar, mit dem MIG/MAG-Schweißbrennergriff 8 verbindbar. Der MIG/MAG-Schweißbrennergriff 8 wiederum wird mit einem entsprechenden Schlauchpaket 14 bzw. den darin verlaufenden Leitungen und Schläuchen verbunden.

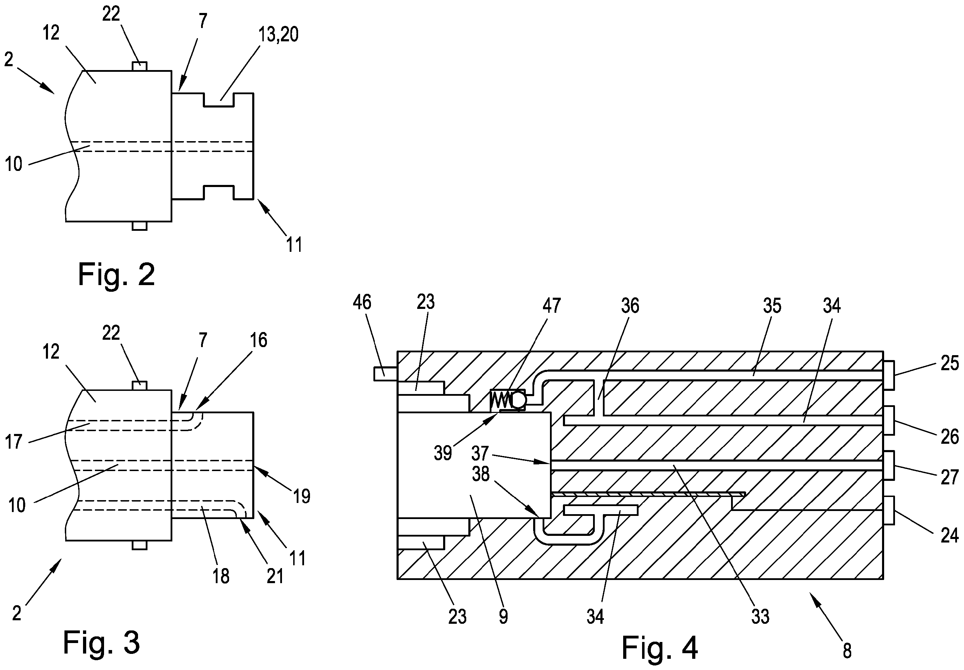

Der MIG/MAG-Schweißbrennerkörper 2 des MIG/MAG-Schweißbrenners 1 besteht aus dem sogenannten Rohrbogen 3, einer Kontaktdüse 4 zur Kontaktierung und Führung eines abschmelzenden Schweißdrahtes 5, einer Gasdüse 6 und einem im Rohrbogen 3 angeordneten im Wesentlichen zylinderförmigen Steckelement 7 zur lösbaren Verbindung mit einem korrespondierenden Aufnahmeteil 9 des MIG/MAG-Schweißbrennergriffs 8. Im Steckelement 7 des MIG/MAG-Schweißbrennerkörpers 2 verläuft der Gaskanal 10 zur Führung des Schutzgases G zur Gasdüse 6. Gleichzeitig ist der Gaskanal 10 zur Führung des abschmelzenden Schweißdrahtes 5 ausgebildet. Der Gaskanal 10 mündet am distalen Ende 11 des Steckelements 7. Am Steckelement 7 ist weiters ein Verbindungskanal 13 angeordnet, der zur Verbindung zweier im Aufnahmeteil 9 des MIG/MAG-Schweißbrennergriffs 8 angeordneter Mündungen 38, 39 von Kanälen 34, 35 zur Führung eines Kühlmittels K ausgebildet ist. Das Steckelement 7 des MIG/MAG-Schweißbrennerkörpers 2 ist vorzugsweise zur steckbaren Verbindung mit dem Aufnahmeteil 9 des MIG/MAG-Schweißbrennergriffs 8 ausgebildet und weist einen sogenannten Brennerverschluss 12 auf, welcher zur Fixierung am Aufnahmeteil 9 des MIG/MAG-Schweißbrennergriffs 8, vorzugsweise um 180° verdrehbar, ausgebildet ist. Beispielsweise wird der MIG/MAG-Schweißbrennerkörper 2 um 180° gegenüber der in Fig. 1 dargestellten Position verdreht in den Aufnahmeteil 9 des MIG/MAG-Schweißbrennergriffs 8 axial eingeschoben, und sodann durch Drehung um 180° zurück in die in Fig. 1 dargestellte Position mit dem MIG/MAG-Schweißbrennergriff 8 verriegelt. Zu diesem Zweck sind entsprechende Fixierelemente 22 an der Außenseiten des Brennerverschlusses 12 und komplementär gestaltete Fixierelemente 23 an der Innenseite des Aufnahmeteils 9 des MIG/MAG-Schweißbrennergriffs 8 angeordnet, wie es in den Figuren 2, 3 und 4 dargestellt ist. Unter der Voraussetzung bestimmter Mechanismen, kann eine Drehbarkeit des MIG/MAG-Schweißbrennerkörpers 2 oder zumindest eines Teils davon und eine Fixierung desselben in unterschiedlichen Winkelpositionen ermöglicht werden.

Der Verbindungskanal 13 am Steckelement 7 weist je nach Ausführung des MIG/MAG-Schweißbrennerkörpers 2 (gasgekühlt oder wassergekühlt) unterschiedliche Konstruktion aus. Beim nicht bzw. nur gasgekühlten MIG/MAG-Schweißbrennerkörper 2 ist der Verbindungskanal 13 als umlaufender Kanal 20 am Steckelement 7, der vom distalen Ende 11 des Steckelements 7 beabstandet ist, ausgebildet, wie in Fig. 1 und Fig. 2 dargestellt. Der Verbindungskanal 10, hier der umlaufende Kanal 20 verbindet die den zweiten Kanal 34 mit dem dritten Kanal 35 am MIG/MAG-Schweißbrennergriff 8.

Sofern der MIG/MAG-Schweißbrennerkörper 2 über eine Wasserkühlung oder Kühlung mit einem anderen Kühlmittel K verfügt, ist der Verbindungskanal 13 durch speziell verlaufende Kanäle im Steckelement 7 gebildet, wie anhand des Beispiels gemäß Fig. 3 erläutert werden wird.

Der MIG/MAG-Schweißbrennergriff 8 beinhaltet vorzugsweise Anschlüsse 24, 25, 26 und 27 zur Verbindung mit einer Drahtseele S zur Führung des Schweißdrahts 5, einer entsprechenden Schweißstromleitung 28 zur Übertragung des Schweißstromes I, einer Schutzgasleitung 29 zur Förderung eines Schutzgases G und allenfalls einer Kühlmittelzuführung 30 und einer Kühlmittelrückführung 31 eines Schlauchpakets 14, über die der Schweißdraht 5 durch die Drahtseele S, das Schutzgas G, ein Kühlmittel K, insbesondere Wasser, zu- und abgeführt wird. Das Schlauchpaket 14 kann auch fix mit dem Schweißbrennergriff 8 verbunden sein und als Einheit vertrieben werden. Üblicherweise sind derartige Einheiten in unterschiedlichen Schlauchpaketlängen erhältlich. Das Schlauchpaket 14 ist entsprechend mit dem Schweißgerät 15 verbunden, welches die Stromquelle für die Bereitstellung des Schweißstromes I, eine Fördereinrichtung zur Förderung des Schweißdrahtes 5 durch die Drahtseele S, einen Speicher zur Bereitstellung des Schutzgases G sowie einen Behälter für das Kühlmittel K beinhaltet.

Der MIG/MAG-Schweißbrennergriff 8 weist weiters ein Stromübertragungselement 32 zur Übertragung des Schweißstromes I auf, der einen zentralen Kanal 33 umfasst. Weiters ist im MIG/MAG-Schweißbrennergriff 8 der Aufnahmeteil 9 zur lösbaren Verbindung mit dem Steckelement 7 des MIG/MAG-Schweißbrennerkörpers 2 angeordnet. Erfindungsgemäß weist der MIG/MAG-Schweißbrennergriff 8 neben dem zentralen Kanal 33 einen zum zentralen Kanal 33 koaxial angeordneten zweiten Kanal 34 auf und ist ein weiterer koaxial zum zweiten Kanal angeordneter dritter Kanal 35 auf, wobei zwischen dem zweiten Kanal 34 und dem dritten Kanal 35 eine Verbindung 36 angeordnet ist. Der zweite Kanal 34 ist vorzugsweise zumindest teilweise als Ringraum ausgebildet, der um den zentralen Kanal 33 verläuft. Der zweite Kanal 34 ist mit dem Anschluss 26 und der dritte Kanal 35 mit dem Anschluss 25 verbunden. Über den Anschluss 24 wird der von der Stromquelle des Schweißgerätes 15 (s. Fig. 1) gelieferte Schweißstrom I mit dem Stromübertragungselement 32 verbunden.

Zur Erzielung bestimmter Verläufe des Schweißdrahtes 5, des Schutzgases G und des Kühlmittels K sind die Mündungen der Kanäle 33, 34, 35 im Aufnahmeteil 9 des MIG/MAG-Schweißbrennergriffs 8 entsprechend angeordnet. Der erste, zentrale Kanal 33 des Schweißbrennergriffs 8 mündet in einer Mündung 37 im Wesentlichen im Zentrum des Endes des Aufnahmeteils 9. Der zweite Kanal 34 ist mit einer Mündung 38 mantelseitig des Aufnahmeteils 9 verbunden. Schließlich mündet der dritte Kanal 35 in einer mantelseitig des Aufnahmeteils 9 angeordneten Mündung 39. Bei entsprechender Verbindung des MIG/MAG-Schweißbrennerkörpers 2 mit dem MIG/MAG-Schweißbrennergriff 8 korrespondiert die Mündung 39 des Kanals 35 mit dem entsprechend angeordneten Verbidnungskanal 13 am Steckelement 7 des MIG/MAG-Schweißbrennerkörpers 2, sodass der Verlauf des Kühlmittels K über den MIG/MAG-Schweißbrennergriff 8 zum MIG/MAG-Schweißbrennerkörper 2 ermöglicht wird.

Es wird darauf hingewiesen, dass die dargestellten Verläufe und Mündungen der Kanäle nur ein Ausführungsbeispiel zeigen, welches im Rahmen der vorliegenden Erfindung aber auch entsprechend abgewandelt werden kann.

Beim wassergekühlten MIG/MAG-Schweißbrennerkörper 2 (s. Fig. 3) korrespondieren die Öffnungen bzw. Mündungen der Kühlmittelkanäle entsprechend mit den Mündungen im Aufnahmeteil 9 des Schweißbrennergriffs 8, sodass ein Verlauf des Kühlmittels K durch die gewünschten Kanäle ermöglicht wird.

Der zentrale Kanal 33 und der Kanal 34 kann durch ein Stromübertragungselement 32, welches beispielsweise aus einer Hülse 50 aus elektrisch leitfähigem Material mit axial angeordneten Schlitzen 51 aufgebaut ist, gebildet sein. Über der Hülse 50 ist ein zylindrisches Isolationselement 52 aus elektrisch isolierendem Material angeordnet. Ein Ausführungsbeispiel eines solchen Stromübertragungselements 32 ist im rechten unteren Teil der Fig. 1 dargestellt.

Am MIG/MAG-Schweißbrennergriff 8 kann weiters ein Schalter 48, Taste oder ähnliches Betätigungselement zum Ein- und Ausschalten des Schweißstromes I angeordnet sein.

In Fig. 2 ist eine Ausführungsform eines erfindungsgemäßen gasgekühlten MIG/MAG-Schweißbrennerkörpers 2 dargestellt. Zusätzlich zur Ausführungsvariante gemäß Fig. 1 ist hier ein Fixierelement 22 am Brennerverschluss 12 des MIG/MAG-Schweißbrennerkörpers 2 dargestellt, welches mit einem entsprechend gestalteten Fixierelement 23 am Aufnahmeteil 9 des MIG/MAG-Schweißbrennergriffs 8 zusammenwirkt und die Fixierung des Schweißbrennerkörpers 2 am Schweißbrennergriff 8 durch eine kombinierte axiale und drehende Bewegung ermöglicht. Der Verbindungskanal 13 ist durch einen umlaufenden Kanal 20 am Steckelement 7 gebildet, durch welchen die Mündung 38 des zweiten Kanals 34 und die Mündung 39 des dritten Kanals 35 im MIG/ MAG-Schweißbrennergriff 8 verbunden werden, sodass ein allenfalls vom Schlauchpaket 14 zugeführtes Kühlmittel K umgelenkt werden kann und wieder über das Schlauchpaket 14 zurückgeführt werden kann.

Fig. 3 zeigt eine schematische Ansicht eines erfindungsgemäßen wassergekühlten MIG/MAG-Schweißbrennerkörpers 2. Der Verbindungskanal 13 im Steckelement 7 des wassergekühlten MIG/MAG-Schweißbrennerkörpers ist durch einen Kanal 17 zur Zuführung des Kühlmittels K und einen Kanal 18 zur Rückführung des Kühlmittels K gebildet, wobei der Kanal 17 zur Zuführung des Kühlmittels K in einer mantelseitig am Steckelement 7 angeordneten Einlassöffnung 16 mündet und der Kanal 18 zur Rückführung des Kühlmittels K in einer mantelseitig am Steckelement 7 angeordneten Rückführöffnung 21 mündet. Die Mündung der Einlassöffnung 16 korrespondiert mit der Mündung 39 des dritten Kanals 35 am MIG/MAG-Schweißbrennergriff 8 und die Mündung der Rückführöffnung 21 korrespondiert mit der Mündung 38 am MIG/MAG-Schweißbrennergriff 8. Somit kann das Kühlmittel vom Schlauchpaket 14 über den MIG/ MAG-Schweißbrennergriff 8 in den MIG/MAG-Schweißbrennerkörper 2 und wieder zurück geführt werden und die Komponenten des MIG/ MAG-Schweißbrenners 1 entsprechend kühlen.

Fig. 4 zeigt eine schematische Ansicht eines erfindungsgemäßen MIG/MAG-Schweißbrennergriffs 8 zur steckbaren Verbindung mit einem MIG/MAG-Schweißbrennerkörper 2 gemäß Fig. 2 oder Fig. 3. Wie bereits im Zusammenhang mit Fig. 1 beschrieben, befinden sich die Mündungen 37, 38 und 39 der Kanäle 33, 34 und 35 des Schweißbrennergriffs 8 an bestimmten Stellen am Aufnahmeteil 9, wo sie mit den entsprechend ausgebildeten Verbindungskanälen 13 am Steckelement 7 des jeweiligen MIG/MAG-Schweißbrennerkörpers 2 übereinstimmen oder zusammenwirken.

An der Innenseite des Aufnahmeteils 9 sind Fixierelemente 23 angeordnet, welche mit komplementär gestalteten Fixierelementen 22 am Brennerverschluss 12 des MIG/MAG-Schweißbrennerkörpers 2 zusammenwirken. Am MIG/MAG-Schweißbrennergriff 8 kann auch ein Entriegelungselement 46 zum Entriegeln der Fixierung des MIG/ MAG-Schweißbrennerkörpers 2 vorgesehen sein, der vor dem Entfernen des MIG/MAG-Schweißbrennerkörpers 2 vom MIG/MAG-Schweißbrennergriff 8 vom Schweißer betätigt werden muss.

Im dritten Kanal 35 kann ein Rückschlagventil 47 angeordnet sein, welches verhindert, dass Rückstände des Kühlmittels K über die Mündung 39 in den Gaskanal 10 des MIG/MAG-Schweißbrennerkörpers 2 gelangen und dort während des Schweißverfahrens die Schweißqualität verringern könnten. Üblicherweise wird vor dem Einsatz des MIG/MAG-Schweißbrenners 1 der Aufnahmeteil 9 des MIG/MAG-Schweißbrennergriffs 8 mit Druckluft ausgeblasen, sodass die möglicherweise vorher mit Kühlmittel K durchströmten Kanäle von Kühlmittelrückständen befreit werden. Wenn das Rückschlagventil 47 - wie dargestellt - unmittelbar an der Mündung 39 angeordnet ist, kann dadurch auch dieser Bereich optimal von Kühlmittelrückständen befreit werden.

Es wird darauf hingewiesen, dass sowohl der MIG/MAG-Schweißbrennerkörper 2 als auch der MIG/MAG-Schweißbrennergriff 8 nicht - wie skizziert - aus einem Hauptbestandteil bestehen muss, sondern aus mehreren Teilen gebildet werden kann, welche aus unterschiedlichen Materialien bestehen können und durch entsprechende Zusammenstellung die verschiedenen Kanäle und Verbindungselemente gebildet werden.

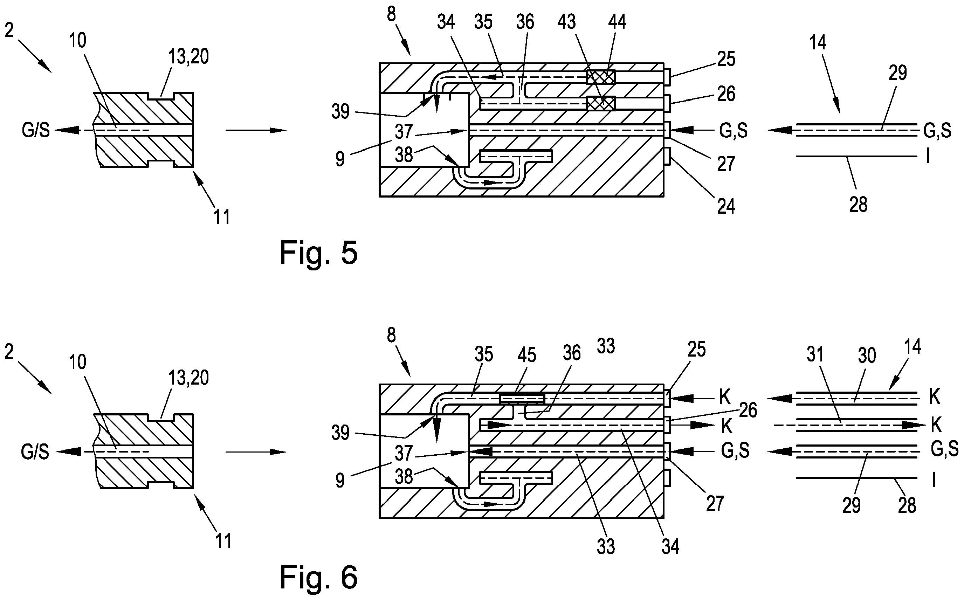

In Fig. 5 ist der schematische Verlauf des Schutzgases G und des abschmelzenden Schweißdrahtes 5 bei Verbindung eines gasgekühlten MIG/MAG-Schweißbrennerkörpers 2 gemäß Fig. 2 mit dem MIG/ MAG-Schweißbrennergriff 8 gemäß Fig. 4 und einem gasgekühlten Schlauchpaket 14 dargestellt. Die Schweißstromleitung 28 des Schlauchpakets 14 wird mit dem Anschluss 24 für die Zuleitung des Schweißstromes I am MIG/MAG-Schweißbrennergriff 8 verbunden, um eine Übertragung des Schweißstromes I vom Anschluss 24 auf das Stromübertragungselement 32 des MIG/MAG-Schweißbrennergriffs 8 und in der Folge über das Steckelement 7 oder dessen stromführenden Teil an die Kontaktdüse 4 des MIG/MAG-Schweißbrennerkörpers 2 zu ermöglichen.

Der Schweißdraht 5 wird über die Dfrahtseele S im Schlauchpaket 14 über den zentralen Kanal 33 im MIG/MAG-Schweißbrennergriff 8 und den Gaskanal 10 im MIG/MAG-Schweißbrennerkörper geführt. Die Schutzgasleitung 29 des Schlauchpakets 14 wird mit dem Anschluss 27 des MIG/MAG-Schweißbrennergriffs 8 zur Zuführung des Schutzgases G verbunden, welche mit dem zentralen Kanal 33 verbunden ist. Der durch den umlaufenden Kanal 20 gebildete Verbindungskanal 13 am Steckelement 7 des MIG/MAG-Schweißbrennerkörpers 2, welcher den zweiten Kanal 34 und den dritten Kanal 35 verbindet, ist hier wirkungslos, da bei dieser Ausführungsvariante über das Schlauchpaket 14 kein Kühlmittel zu- und abgeführt wird.

Um zu verhindern, dass das Schutzgas G über die Anschlüsse 25, 26 der Kanäle 34, 35 austreten kann, werden entsprechende Abdichtelemente 43, 44 in den Kanälen 34, 35 angeordnet. Diese Abdichtelemente können beispielsweise in die Kanäle 34, 35 eingeschoben und axial fixiert werden. Natürlich können die Abdichtelement 43, 44 auch Dichtringe aus elastischem Material (nicht dargestellt) beinhalten oder auch anders ausgebildet sein, beispielsweise in Form von Kappen oder dergl. an den Anschlüssen 25, 26.

Fig. 6 zeigt den schematischen Verlauf des Schutzgases G, des Schweißdrahtes 5 und Kühlmittels K bei Verbindung eines gasgekühlten MIG/MAG-Schweißbrennerkörpers 2 gemäß Fig. 2 mit dem MIG/MAG-Schweißbrennergriff 8 gemäß Fig. 4 und einem wassergekühlten Schlauchpaket 14. Hier wird die Schutzgasleitung 29 des Schlauchpakets 14 mit dem Anschluss 27 des zentralen Kanals 33 verbunden. Durch den zentralen Kanal wird auch der über eine Drahtseele S im Schlauchpaket 14 zugeführte Schweißdraht 5 geführt. Die Kühlmittelzuführung 30 wird mit dem Anschluss 25 des dritten Kanals 35 und die Kühlmittelrückführung 31 mit dem Anschluss 26 des zweiten Kanals 34 verbunden. In den Kanal 35 wird ein Rohr 45 eingeschoben, welches die Verbindung 36 zwischen drittem Kanal 35 und zweitem Kanal 34 verschließt. Somit verläuft das Kühlmittel K über den Anschluss 25, den dritten Kanal 35 in die Mündung 39 und in den als umlaufender Kanal 20 am Steckelement 7 des MIG/MAG-Schweißbrennerkörpers 2 gebildeten Verbindungskanal 13. Das Kühlmittel K verläuft über die Mündung 38 in den zweiten Kanal 34 und wird über den Kanal 31 des Schlauchpakets 14 zurückgeführt. Durch das Rohr 45 und den Verschluss der Verbindung 36 zwischen zweitem Kanal 34 und drittem Kanal 35 wird ein Fließen des Kühlmittel K in den dritten Kanal 35 verhindert. Dadurch, dass das Kühlmittel K auch durch einen Teil des MIG/MAG-Schweißbrennergriffs 8 strömt, kann dieses ebenfalls gekühlt werden, insbesondere im Bereich des Stromübertragungselements 32.

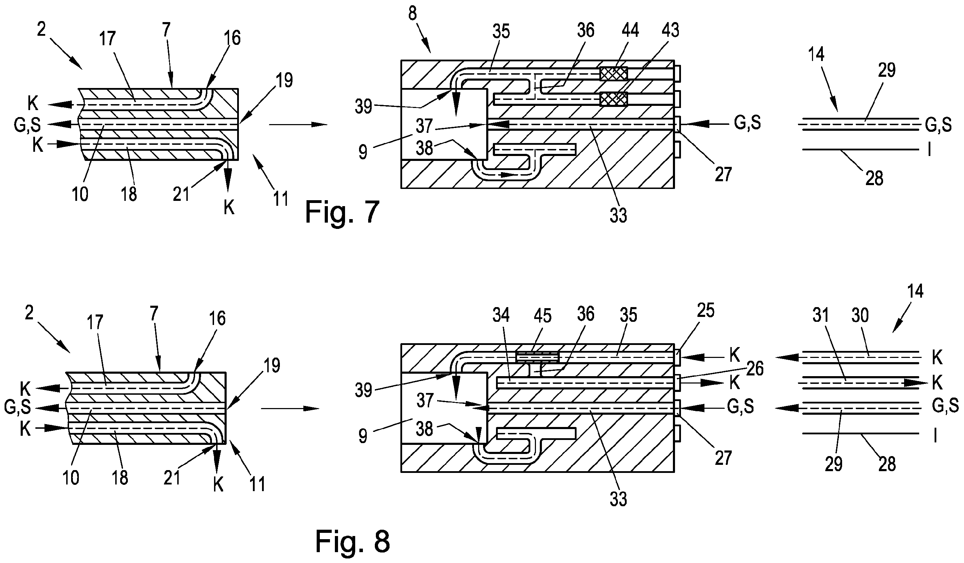

Fig. 7 zeigt den schematischen Verlauf des Schutzgases G und Schweißdrahtes 5 bei Verbindung eines wassergekühlten MIG/MAG-Schweißbrennerkörpers 2 gemäß Fig. 3 mit dem MIG/MAG-Schweißbrennergriff 8 gemäß Fig. 4 und einem gasgekühlten Schlauchpaket 14. Bei dieser Variante wird die Schutzgasleitung 29 des Schlauchpakets 14 mit dem Anschluss 27 des MIG/MAG-Schweißbrennergriffs 8 verbunden, wodurch das Schutzgas G und der Schweißdraht 5 durch den zentralen Kanal 33 verläuft, von der Mündung 37 in die zentrale Eintrittsmündung 19 des Gaskanals 10 am distalen Ende 11 des Steckelements 7 des MIG/MAG-Schweißbrennerkörpers 2 gelangt. Die Mündung 16 des Kanals 17 korrespondiert mit der Mündung 39 des dritten Kanals 35 und die Rückführöffnung 21 mit der Mündung 38 des zweiten Kanals 34. Da hier kein Kühlmittel K über das Schlauchpaket zu- und abgeführt wird, sind die Kanäle hier wirkungslos. Daher sind die Kanäle 34, 35 auch mit entsprechenden Abdichtelementen 43, 44 verschlossen.

In Fig. 8 ist der schematische Verlauf des Schutzgases G, Schweißdrahtes 5 und Kühlmittels K bei Verbindung eines wassergekühlten MIG/MAG-Schweißbrennerkörpers 2 gemäß Fig. 3 mit dem MIG/MAG-Schweißbrennergriff 8 gemäß Fig. 4 und einem wassergekühlten Schlauchpaket 14 skizziert. Bei dieser Variante wird die Schutzgasleitung 29 und die Drahtseele S zur Führung des Schweißdrahtes 5 des Schlauchpakets 14 mit dem Anschluss 27 des MIG/MAG-Schweißbrennergriffs 8 verbunden, wodurch das Schutzgas G und der Schweißdraht 5 über den zentralen Kanal 33 zur Mündung 37 und über die Eintrittsmündung 19 am Steckelement 7 in den Gaskanal 10 und zur Gasdüse 6 des MIG/MAG-Schweißbrennerkörpers 2 gelangt.

Die Kühlmittelzuführung 30 des Schlauchpakets 14 wird mit dem Anschluss 25, der mit dem dritten Kanal 35 des MIG/MAG-Schweißbrennergriffs 8 verbunden ist, verbunden, sodass das Kühlmittel K über den Kanal 35 und die Mündung 39 in die Einlassöffnung 16 des Kanals 17 am distalen Ende 11 des Steckelements 7 zur Gasdüse 6 gelangen kann und über den Kanal 18 und die Rückführöffnung 21 schließlich in die Mündung 38 im Aufnahmeteil 9 des MIG/MAG-Schweißbrennergriffs 8 gelangt und dort in den zweiten Kanal 34 und schließlich zum Anschluss 26, der mit der Kühlmittelrückführung 31 des Schlauchpakets 14 verbunden wird, gelangt. Zur Verhinderung eines Strömens des Kühlmittels K über die Verbindung 36 in den zweiten Kanal 34 wird ähnlich wie bei der Variante gemäß Fig. 6 ein Rohr 45 in den dritten Kanal 35 angeordnet, welches die Verbindung 36 verschließt.

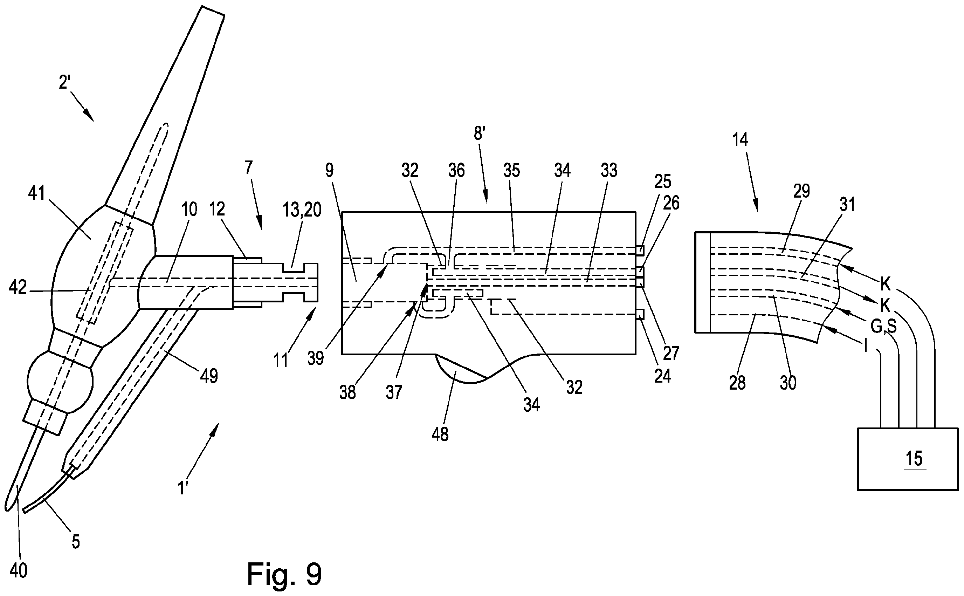

Schließlich zeigt Fig. 9 eine schematische Ansicht auf einen WIG-Schweißbrenner 1' mit WIG-Schweißbrennerkörper 2', mit einem Brennerhals 41, einem Elektrodenhalter 42 zur Aufnahme einer nichtabschmelzenden Schweißelektrode 40, einer Gasdüse 6 und einem im Brennerhals 41 angeordneten im Wesentlichen zylinderförmigen Steckelement 7 zur lösbaren Verbindung mit einem Aufnahmeteil 9 eines WIG-Schweißbrennergriffs 8', welches Steckelement 7 eine Einlassöffnung 19 für das Schutzgas G und einen mit der Einlassöffnung 19 verbundenen Gaskanal 10 zur Führung des Schutzgases G zur Gasdüse 6 aufweist und zur Übertragung eines Schweißstromes I zum Elektrodenhalter 42 ausgebildet ist, und mit einer Einrichtung 49 zur Zuführung eines abschmelzenden Schweißdrahtes 5. So wie beim oben beschriebenen MIG/MAG-Schweißbrenner 1 ist auch beim WIG-Schweißbrennerkörper 2' der Gaskanal 10 gleichzeitig zur Führung des Schweißdrahtes 5 ausgebildet und die Einlassöffnung 19 im Wesentlichen zentral am distalen Ende 11 des Steckelements 7 angeordnet, und am Steckelement 7 ein Verbindungskanal 13 angeordnet, der zur Verbindung zweier im Aufnahmeteil 9 des WIG-Schweißbrennergriffs 8' angeordneter Mündungen 38, 39 von Kanälen 34, 35 zur Führung eines Kühlmittels K ausgebildet ist. Zu den dadurch erzielbaren Vorteilen wird auf die obige Beschreibung im Zusammenhang mut dem MIG/MAG-Schweißbrenner 1 verwiesen.

Der Schweißbrenner gemäß der vorliegenden Erfindung zeichnet sich durch einfache Bauart, hohe Flexibilität der Verbindung eines gasgekühlten Schweißbrennerkörpers oder wassergekühlten Schweißbrennerkörpers mit einem Schweißbrennergriff und einem gasgekühlten Schlauchpaket oder wassergekühlten Schlauchpaket aus.

## Patentansprüche

1. MIG/MAG-Schweißbrennerkörper (2), mit einem Rohrbogen (3), einer Kontaktdüse (4) zur Kontaktierung und Führung eines abschmelzenden Schweißdrahtes (5), einer Gasdüse (6) und einem am Rohrbogen (3) angeordneten im Wesentlichen zylinderförmigen Steckelement (7) zur lösbaren Verbindung mit einem korrespondierenden Aufnahmeteil (9) eines MIG/MAG-Schweißbrennergriffs (8), welches Steckelement (7) eine Einlassöffnung (19) für das Schutzgas (G) und einen mit der Einlassöffnung (19) verbundenen Gaskanal (10) zur Führung des Schutzgases (G) zur Gasdüse (6) und gleichzeitig zur Führung des Schweißdrahtes (5) aufweist und zur Übertragung eines Schweißstromes (I) zur Kontaktdüse (4) ausgebildet ist, wobei die Einlassöffnung (19) im Wesentlichen zentral am distalen Ende (11) des Steckelements (7) angeordnet ist, wobei das Steckelement (7) zur steckbaren Verbindung mit dem Aufnahmeteil (9) des MIG/MAG-Schweißbrennergriffs (8) ausgebildet ist und einen Brennerverschluss (12) aufweist, welcher zur Fixierung am Aufnahmeteil (9) des MIG/MAG-Schweißbrennergriffs (8) vorzugsweise um 180° verdrehbar ausgebildet ist, **dadurch gekennzeichnet, dass** mantelseitig am Steckelement (7) ein durch einen vom distalen Ende (11) des Steckelements (7) beabstandeten umlaufenden Kanal (20) gebildeter Verbindungskanal (13) angeordnet ist, der bei verbundenem MIG/MAG-Schweißbrennergriff (8) zur Verbindung zweier mantelseitig im Aufnahmeteil (9) des MIG/MAG-Schweißbrennergriffs (8) angeordneter Mündungen (38, 39) von Kanälen (34, 35) zur Führung eines Kühlmittels (K) ausgebildet ist.

2. MIG/MAG-Schweißbrennerkörper (2), mit einem Rohrbogen (3), einer Kontaktdüse (4) zur Kontaktierung und Führung eines abschmelzenden Schweißdrahtes (5), einer Gasdüse (6) und einem am Rohrbogen (3) angeordneten im Wesentlichen zylinderförmigen Steckelement (7) zur lösbaren Verbindung mit einem korrespondierenden Aufnahmeteil (9) eines MIG/MAG-Schweißbrennergriffs (8), welches Steckelement (7) eine Einlassöffnung (19) für das Schutzgas (G) und einen mit der Einlassöffnung (19) verbundenen Gaskanal (10) zur Führung des Schutzgases (G) zur Gasdüse (6) und gleichzeitig zur Führung des Schweißdrahtes (5) aufweist und zur Übertragung eines Schweißstromes (I) zur Kontaktdüse (4) ausgebildet ist, wobei die Einlassöffnung (19) im Wesentlichen zentral am distalen Ende (11) des Steckelements (7) angeordnet ist, wobei das Steckelement (7) zur steckbaren Verbindung mit dem Aufnahmeteil (9) des MIG/MAG-Schweißbrennergriffs (8) ausgebildet ist und einen Brennerverschluss (12) aufweist, welcher zur Fixierung am Aufnahmeteil (9) des MIG/MAG-Schweißbrennergriffs (8) vorzugsweise um 180° verdrehbar ausgebildet ist, **dadurch gekennzeichnet, dass** mantelseitig am Steckelement (7) ein Verbindungskanal (13) angeordnet ist, welcher Verbindungskanal (13) durch einen Kanal (17) zur Zuführung des Kühlmittels (K) und einen Kanal (18) zur Rückführung des Kühlmittels (K) gebildet ist, wobei der Kanal (17) zur Zuführung des Kühlmittels (K) in einer mantelseitig am Steckelement (7) angeordneten Einlassöffnung (16) mündet und der Kanal (18) zur Rückführung des Kühlmittels (K) in einer mantelseitig am Steckelement (7) angeordneten Rückführöffnung (21) mündet, und welcher Verbindungskanal (13) bei verbundenem MIG/MAG-Schweißbrennergriff (8) zur Verbindung zweier mantelseitig im Aufnahmeteil (9) des MIG/ MAG-Schweißbrennergriffs (8) angeordneter Mündungen (38, 39) von Kanälen (34, 35) zur Führung eines Kühlmittels (K) ausgebildet ist.

3. MIG/MAG-Schweißbrennerkörper (2) nach Anspruch 1 oder 2, **dadurch gekennzeichnet, dass** der Brennerverschluss (12) um 180° verdrehbar ausgebildet ist.

4. MIG/MAG-Schweißbrennerkörper (2) nach einem der Ansprüche 1 bis 3, **dadurch gekennzeichnet, dass** der Brennerverschluss (12) im Wesentlichen rohrförmig ausgebildet ist und an der Außenseite Fixierelemente (22) aufweist, welche mit komplementär gestalteten Fixierelementen (23) am Aufnahmeteil (9) des MIG/MAG-Schweißbrennergriffs (8) zusammenwirken.

5. MIG/MAG-Schweißbrennerkörper (2) nach einem der Ansprüche 1 bis 4, **dadurch gekennzeichnet, dass** das Steckelement (7) aus Metall, insbesondere Messing, und der Brennerverschluss (12) aus Kunststoff gebildet ist.

6. WIG-Schweißbrennerkörper (2'), mit einem Brennerhals (41), einem Elektrodenhalter (42) zur Aufnahme einer nichtabschmelzenden Schweißelektrode (40), einer Gasdüse (6) und einem im Brennerhals (41) angeordneten im Wesentlichen zylinderförmigen Steckelement (7) zur lösbaren Verbindung mit einem korrespondierenden Aufnahmeteil (9) eines WIG-Schweißbrennergriffs (8'), und mit einer Einrichtung (49) zur Zuführung eines abschmelzenden Schweißdrahtes (5), welches Steckelement (7) eine Einlassöffnung (19) für das Schutzgas (G) und einen mit der Einlassöffnung (19) verbundenen Gaskanal (10) zur Führung des Schutzgases (G) zur Gasdüse (6) und gleichzeitig zur Führung des Schweißdrahtes (5) aufweist und zur Übertragung eines Schweißstromes (I) zum Elektrodenhalter (42) ausgebildet ist, wobei die Einlassöffnung (19) im Wesentlichen zentral am distalen Ende (11) des Steckelements (7) angeordnet ist, wobei das Steckelement (7) zur steckbaren Verbindung mit dem Aufnahmeteil (9) des WIG-Schweißbrennergriffs (8') ausgebildet ist und einen Brennerverschluss (12) aufweist, welcher zur Fixierung am Aufnahmeteil (9) des WIG-Schweißbrennergriffs (8') vorzugsweise um 180° verdrehbar ausgebildet ist, **dadurch gekennzeichnet, dass** mantelseitig am Steckelement (7) ein durch einen vom distalen Ende (11) des Steckelements (7) beabstandeten umlaufenden Kanal (20) gebildeter Verbindungskanal (13) angeordnet ist, oder der Verbindungskanal (13) durch einen Kanal (17) zur Zuführung des Kühlmittels (K) und einen Kanal (18) zur Rückführung des Kühlmittels (K) gebildet ist, wobei der Kanal (17) zur Zuführung des Kühlmittels (K) in einer mantelseitig am Steckelement (7) angeordneten Einlassöffnung (16) mündet und der Kanal (18) zur Rückführung des Kühlmittels (K) in einer mantelseitig am Steckelement (7) angeordneten Rückführöffnung (21) mündet, und der Verbundungskanal (13) bei verbundenem WIG-Schweißbrennergriff (8') zur Verbindung zweier mantelseitig im Aufnahmeteil (9) des WIG-Schweißbrennergriffs (8') angeordneter Mündungen (38, 39) von Kanälen (34, 35) zur Führung eines Kühlmittels (K) ausgebildet ist.

7. MIG/MAG-Schweißbrennergriff (8), mit einem Stromübertragungselement (32), einem zentralen Kanal (33), und einem Aufnahmeteil (9) zur lösbaren Verbindung mit einem im Wesentlichen zylinderförmigen Steckelement (7) eines MIG/MAG-Schweißbrennerkörpers (2), **dadurch gekennzeichnet, dass** ein zum zentralen Kanal (33) koaxial angeordneter zweiter Kanal (34) und ein weiterer koaxial zum zweiten Kanal (34) angeordneter dritter Kanal (35) vorgesehen ist, wobei zwischen zweitem Kanal (34) und drittem Kanal (35) eine Verbindung (36) vorgesehen ist, und der erste Kanal (33) eine Mündung (37) im Zentrum des Aufnahmeteils (9), der zweite Kanal (34) eine Mündung (38) mantelseitig des Aufnahmeteils (9) und der dritte Kanal (35) eine Mündung (39) mantelseitig des Aufnahmeteils (9) aufweist.

8. MIG/MAG-Schweißbrennergriff (8) nach Anspruch 7, **dadurch gekennzeichnet, dass** zumindest ein Abdichtelement (43, 44) zum Abdichten zumindest eines Kanals (33, 34, 35) vorgesehen ist.

9. MIG/MAG-Schweißbrennergriff (8) nach Anspruch 7 oder 8, **dadurch gekennzeichnet, dass** ein Rohr (45) zum Einschieben in den dritten Kanal (35) und gleichzeitigen Abdichten der Verbindung (36) vorgesehen ist.

10. MIG/MAG-Schweißbrennergriff (8) nach einem der Ansprüche 7 bis 9, **dadurch gekennzeichnet, dass** der Aufnahmeteil (9) an der Innenseite Fixierelemente (23) aufweist, welche mit komplementär gestalteten Fixierelementen (22) am Brennerverschluss (12) des MIG/MAG-Schweißbrennerkörpers (2) zusammenwirken.

11. MIG/MAG-Schweißbrennergriff (8) nach Anspruch 10, **dadurch gekennzeichnet, dass** ein Entriegelungselement (46) zum Entriegeln der Fixierung des MIG/MAG-Schweißbrennerkörpers (2) vorgesehen ist.

12. MIG/MAG-Schweißbrennergriff (8) nach einem der Ansprüche 7 bis 11, **dadurch gekennzeichnet, dass** im dritten Kanal (35) ein Rückschlagventil (47) angeordnet ist.

13. MIG/MAG-Schweißbrennergriff (8) nach einem der Ansprüche 7 bis 12, **dadurch gekennzeichnet, dass** ein Schalter (48) zum Ein- und Ausschalten des Schweißstromes (I) angeordnet ist.

14. MIG/MAG-Schweißbrenner (1), mit einem MIG/MAG-Schweißbrennerkörper (2) nach einem der Ansprüche 1 bis 5 und einem MIG/ MAG-Schweißbrennergriff (8) nach einem der Ansprüche 7 bis 13.

## Claims

1. A MIG/MAG welding torch body (2), comprising a pipe bend (3), a contact nozzle (4) for contacting and guiding a consumable welding wire (5), a gas nozzle (6), and an essentially cylindrical plug element (7), which is arranged at the pipe bend (3), for the detachable connection to a corresponding receiving part (9) of a MIG/MAG welding torch handle (8), said plug element (7) having an inlet opening (19) for the protective gas (G), and a gas channel (10), which is connected to the inlet opening (19), for guiding the protective gas (G) to the gas nozzle (6) and simultaneously for guiding the welding wire (5), and which is formed for transferring a welding current (I) to the contact nozzle (4), wherein the inlet opening (19) is arranged essentially centrally at the distal end (11) of the plug element (7), wherein the plug element (7) is formed for the plug connection to the receiving part (9) of the MIG/MAG welding torch handle (8), and has a torch closure (12), which is formed for the fixation to the receiving part (9) of the MIG/MAG welding torch handle (8), so as to be rotatable preferably by 180°, **characterized in that** a connection channel (13), which is formed by means of a circumferential channel (20), which is spaced apart from the distal end (11) of the plug element (7), and which, when the MIG/MAG welding torch handle (8) is connected, is formed for connecting two orifices (38, 39) of channels (34, 35) for guiding a cooling medium (K) arranged on the lateral side in the receiving part (9) of the MIG/MAG welding torch handle (8), is arranged at the plug element (7) on the lateral side.

2. A MIG/MAG welding torch body (2), comprising a pipe bend (3), a contact nozzle (4) for contacting and guiding a consumable welding wire (5), a gas nozzle (6), and an essentially cylindrical plug element (7), which is arranged at the pipe bend (3), for the detachable connection to a corresponding receiving part (9) of a MIG/MAG welding torch handle (8), said plug element (7) having an inlet opening (19) for the protective gas (G), and a gas channel (10), which is connected to the inlet opening (19), for guiding the protective gas (G) to the gas nozzle (6) and simultaneously for guiding the welding wire (5), and which is formed for transferring a welding current (I) to the contact nozzle (4), wherein the inlet opening (19) is arranged essentially centrally at the distal end (11) of the plug element (7), wherein the plug element (7) is formed for the plug connection to the receiving part (9) of the MIG/MAG welding torch handle (8), and has a torch closure (12), which is formed for the fixation to the receiving part (9) of the MIG/MAG welding torch handle (8), so as to be rotatable preferably by 180°, **characterized in that** a connection channel (13) is arranged at the plug element (7) on the lateral side, said connection channel (13) being formed by means of a channel (17) for feeding the cooling medium (K), and a channel (18) for returning the cooling medium (K), wherein the channel (17) for returning the cooling medium (K) opens out in an inlet opening (16), which is arranged at the plug element (7) on the lateral side, and the channel (18) for returning the cooling medium (K) opens out in a return opening (21), which is arranged at the plug element (7) on the lateral side, and said connection channel (13), when the MIG/MAG welding torch handle (8) is connected, is formed for connecting two orifices (38, 39) of channels (34, 35) for guiding a cooling medium (K) arranged on the lateral side in the receiving part (9) of the MIG/MAG welding torch handle (8).

3. The MIG/MAG welding torch body (2) according to claim 1 or 2, **characterized in that** the torch closure (12) is formed so as to be rotatable by 180°.

4. The MIG/MAG welding torch body (2) according to one of claims 1 to 3, **characterized in that** the torch closure (12) is formed in an essentially tubular manner and has fixing elements (22) on the outer side, which cooperate with fixing elements (23) of a complementary design at the receiving part (9) of the MIG/MAG welding torch handle (8).

5. The MIG/MAG welding torch body (2) according to one of claims 1 to 4, **characterized in that** the plug element (7) is made of metal, in particular brass, and the torch closure (12) is made of plastic.

6. A TIG welding torch body (2'), comprising a torch neck (41), an electrode holder (42) for receiving a non-consumable welding electrode (40), a gas nozzle (6), and an essentially cylindrical plug element (7), which is arranged in the torch neck (41), for the detachable connection to a corresponding receiving part (9) of a TIG welding torch handle (8'), and comprising a means (49) for feeding a consumable welding wire (5), said plug element (7) having an inlet opening (19) for the protective gas (G), and a gas channel (10), which is connected to the inlet opening (19), for guiding the protective gas (G) to the gas nozzle (6) and simultaneously for guiding the welding wire (5), and which is formed for transferring a welding current (I) to the electrode holder (42), wherein the inlet opening (19) is arranged essentially centrally at the distal end (11) of the plug element (7), wherein the plug element (7) is formed for the plug connection to the receiving part (9) of the TIG welding torch handle (8'), and has a torch closure (12), which is formed for the fixation to the receiving part (9) of the WIG welding torch handle (8'), so as to be rotatable preferably by 180°, **characterized in that** a connection channel (13), which is formed by means of a circumferential channel (20), which is spaced apart from the distal end (11) of the plug element (7), is arranged on the lateral side at the plug element (7), or the connection channel (13) is formed by means of a channel (17) for feeding the cooling medium (K), and a channel (18) for returning the cooling medium (K), wherein the channel (17) for returning the cooling medium (K) opens out in an inlet opening (16), which is arranged at the plug element (7) on the lateral side, and the channel (18) for returning the cooling medium (K) opens out in a return opening (21), which is arranged at the plug element (7) on the lateral side, and the connection channel (13), when the WIG welding torch handle (8') is connected, is formed for connecting two orifices (38, 39) of channels (34, 35) for guiding a cooling medium (K) arranged on the lateral side in the receiving part (9) of the WIG welding torch handle (8').

7. A MIG/MAG welding torch handle (8), comprising a current transmission element (32), a central channel (33), and a receiving part (9) for the detachable connection to an essentially cylindrical plug element (7) of a MIG/MAG welding torch body (2), **characterized in that** a second channel (34), which is arranged coaxially to the central channel (33), and a further third channel (35), which is arranged coaxially to the second channel (34), is provided, wherein a connection (36) is provided between second channel (34) and third channel (35), and the first channel (33) has an orifice (37) in the center of the receiving part (9), the second channel (34) has an orifice (38) on the lateral side of the receiving part (9), and the third channel (35) has an orifice (39) on the lateral side of the receiving part (9).

8. The MIG/MAG welding torch handle (8) according to claim 7, **characterized in that** at least one sealing element (43, 44) for sealing at least one channel (33, 34, 35) is provided.

9. The MIG/MAG welding torch handle (8) according to claim 7 or 8, **characterized in that** a tube (45) for inserting into the third channel (35) and for simultaneously sealing the connection (36) is provided.

10. The MIG/MAG welding torch handle (8) according to one of claims 7 to 9, **characterized in that** the receiving part (9) has fixing elements (23) on the inner side, which cooperate with fixing elements (22) of a complementary design at the torch closure (12) of the MIG/MAG welding torch body (2).

11. The MIG/MAG welding torch handle (8) according to claim 10, **characterized in that** an unlocking element (46) for unlocking the fixation of the MIG/MAG welding torch body (2) is provided.

12. The MIG/MAG welding torch handle (8) according to one of claims 7 to 11, **characterized in that** a check valve (47) is arranged in the third channel (35).

13. The MIG/MAG welding torch handle (8) according to one of claims 7 to 12, **characterized in that** a switch (48) for turning on and turning off the welding current (I) is arranged.

14. A MIG/MAG welding torch (1) comprising a MIG/MAG welding torch body (2) according to one of claims 1 to 5, and a MIG/MAG welding torch handle (8) according to one of claims 7 to 13.

## Revendications

1. Corps de torche de soudage MIG/MAG (2), avec un coude de tube (3), une buse de contact (4) pour contacter et guider un fil de soudage consommable par fusion (5), une buse à gaz (6) et un élément enfichable sensiblement cylindrique (7) disposé sur le coude de tube (3) pour une liaison amovible avec une partie réceptrice correspondante (9) d'une poignée de torche de soudage MIG/MAG (8), lequel élément enfichable (7) comporte une ouverture d'entrée (19) pour le gaz protecteur (G) et un canal à gaz (10) relié à l'ouverture d'entrée (19) pour guider le gaz protecteur (G) vers la buse à gaz (6) et en même temps pour guider le fil de soudage (5) et est conçu pour transmettre un courant de soudage (I) à la buse de contact (4), où l'ouverture d'entrée (19) est disposée de manière sensiblement centrale à l'extrémité distale (11) de l'élément enfichable (7), où l'élément enfichable (7) est conçu pour une liaison enfichable avec la partie réceptrice (9) de la poignée de torche de soudage MIG/MAG (8) et comporte une fermeture de torche (12) qui est conçue pour pouvoir tourner de préférence de 180° pour la fixation sur la partie réceptrice (9) de la poignée de torche de soudage MIG/MAG (8), **caractérisé en ce que** du côté enveloppe sur l'élément enfichable (7) est disposé un canal de liaison (13) formé par un canal périphérique (20) distant de l'extrémité distale (11) de l'élément enfichable (7), qui est conçu, lorsque la poignée de torche de soudage MIG/MAG est reliée, pour la liaison de deux embouchures (38, 39) de canaux (34, 35) de guidage d'un fluide de refroidissement (K) disposées du côté enveloppe dans la partie réceptrice (9) de la poignée de torche de soudage MIG/MAG (8).

2. Corps de torche de soudage MIG/MAG (2), avec un coude de tube (3), une buse de contact (4) pour contacter et guider un fil de soudage consommable par fusion (5), une buse à gaz (6) et un élément enfichable sensiblement cylindrique (7) agencé sur le coude de tube (3) pour une liaison amovible avec une partie réceptrice correspondante (9) d'une poignée de torche de soudage MIG/MAG (8), lequel élément enfichable (7) comporte une ouverture d'entrée (19) pour le gaz protecteur (G) et un canal à gaz (10) relié à l'ouverture d'entrée (19) pour guider le gaz protecteur (G) vers la buse à gaz (6) et en même temps pour guider le fil de soudage (5) et est conçu pour transmettre un courant de soudage (I) à la buse de contact (4), où l'ouverture d'entrée (19) est disposée de manière sensiblement centrale à l'extrémité distale (11) de l'élément enfichable (7), où l'élément enfichable (7) est conçu pour la liaison enfichable avec la partie réceptrice (9) de la poignée de torche de soudage MIG/MAG (8) et présente une fermeture de torche (12) qui est conçue pour pouvoir tourner, de préférence de 180°, pour la fixation sur la partie réceptrice (9) de la poignée de torche de soudage MIG/MAG (8), **caractérisé en ce que**, du côté enveloppe sur l'élément enfichable (7) est disposé un canal de liaison (13), lequel canal de liaison (13) est formé par un canal (17) pour l'apport du fluide de refroidissement (K) et un canal (18) pour le retour du fluide de refroidissement (K), où le canal (17) pour l'apport du fluide de refroidissement (K) débouche dans une ouverture d'entrée (16) disposée du côté enveloppe sur l'élément enfichable (7), et le canal (18) pour le retour du fluide de refroidissement (K) débouche dans une ouverture de retour (21) disposée du côté enveloppe sur l'élément enfichable (7), et lequel canal de liaison (13) est conçu, lorsque la poignée de torche de soudage MIG/MAG (8) est reliée, pour la liaison de deux embouchures (38, 39) de canaux (34, 35) pour le guidage d'un fluide de refroidissement (K) disposées du côté enveloppe dans la partie réceptrice (9) de la poignée de torche de soudage MIG/MAG (8).

3. Corps de torche de soudage MIG/MAG (2) selon la revendication 1 ou 2, **caractérisé en ce que** la fermeture de torche (12) est conçue pour pouvoir tourner de 180°.

4. Corps de torche de soudage MIG/MAG (2) selon l'une des revendications 1 à 3, **caractérisé en ce que** la fermeture de torche (12) est conçue de manière sensiblement tubulaire et comporte sur le côté extérieur des éléments de fixation (22) qui coopèrent avec des éléments de fixation (23) formés de manière complémentaire sur la partie réceptrice (9) de la poignée de torche de soudage MIG/MAG (8).

5. Corps de torche de soudage MIG/MAG (2) selon l'une des revendications 1 à 4, **caractérisé en ce que** l'élément enfichable (7) est formé de métal, en particulier de laiton, et la fermeture de torche (12) est formée de matière plastique.

6. Corps de torche de soudage TIG (2'), avec un col de torche (41), un porte-électrode (42) pour recevoir une électrode de soudage non consommable par fusion (40), une buse à gaz (6) et un élément enfichable sensiblement cylindrique (7) disposé dans le col de torche (41) pour une liaison amovible avec une partie réceptrice correspondante (9) d'une poignée de torche de soudage TIG (8'), et avec un dispositif (49) pour l'apport d'un fil de soudage consommable par fusion (5), lequel élément enfichable (7) comporte une ouverture d'entrée (19) pour le gaz protecteur (G) et un canal à gaz (10) relié à l'ouverture d'entrée (19) pour guider le gaz protecteur (G) vers la buse à gaz (6) et en même temps pour guider le fil de soudage (5) et est conçu pour transmettre un courant de soudage (I) au porte-électrode (42), où l'ouverture d'entrée (19) est disposée de manière sensiblement centrale à l'extrémité distale (11) de l'élément enfichable (7), où l'élément enfichable (7) est conçu pour une liaison enfichable avec la partie réceptrice (9) de la poignée de torche de soudage TIG (8') et comporte une fermeture de torche (12) qui est conçue pour pouvoir tourner de préférence de 180° pour la fixation sur la partie réceptrice (9) de la poignée de torche de soudage TIG (8'), **caractérisé en ce que** du côté enveloppe sur l'élément enfichable (7) est disposé un canal de liaison (13) formé par un canal périphérique (20) distant de l'extrémité distale (11) de l'élément enfichable (7), ou le canal de liaison (13) est formé par un canal (17) pour l'apport du fluide de refroidissement (K) et un canal (18) pour le retour du fluide de refroidissement (K), où le canal (17) pour l'apport du fluide de refroidissement (K) débouche dans une ouverture d'entrée (16) disposée du côté enveloppe sur l'élément enfichable (7) et le canal (18) pour le retour du fluide de refroidissement (K) débouche dans une ouverture de retour (21) disposée du côté enveloppe sur l'élément enfichable (7), et le canal de liaison (13) est conçu, lorsque la poignée de torche de soudage TIG (8') est reliée, pour la liaison de deux embouchures (38, 39) de canaux (34, 35) pour le guidage d'un agent de refroidissement (K) disposées du côté enveloppe dans la partie réceptrice (9) de la poignée de torche de soudage TIG (8').

7. Poignée de torche de soudage MIG/MAG (8), avec un élément de transmission de courant (32), un canal central (33), et une partie réceptrice (9) pour une liaison amovible avec un élément enfichable sensiblement cylindrique (7) d'un corps de torche de soudage MIG/MAG (2), **caractérisée en ce qu'**il est prévu un deuxième canal (34) disposé coaxialement au canal central (33) et un troisième canal (35) disposé coaxialement au deuxième canal (34), où une liaison (36) est prévue entre le deuxième canal (34) et le troisième canal (35), et le premier canal (33) comporte une embouchure (37) au centre de la partie réceptrice (9), le deuxième canal (34) comporte une embouchure (38) du côté enveloppe de la partie réceptrice (9) et le troisième canal (35) comporte une embouchure (39) du côté enveloppe de la partie réceptrice (9).

8. Poignée de torche de soudage MIG/MAG (8) selon la revendication 7, **caractérisée en ce qu'**au moins un élément d'étanchéité (43, 44) pour l'étanchéité d'au moins un canal (33, 34, 35) est prévu.

9. Poignée de torche de soudage MIG/MAG (8) selon la revendication 7 ou 8, **caractérisée en ce qu'**un tube (45) pour l'insertion dans le troisième canal (35) et l'étanchéification simultanée de la liaison (36) est prévu.

10. Poignée de torche de soudage MIG/MAG (8) selon l'une des revendications 7 à 9, **caractérisée en ce que** la partie réceptrice (9) comporte sur le côté intérieur des éléments de fixation (23) qui coopèrent avec des éléments de fixation (22) formés de manière complémentaire sur la fermeture de torche (12) du corps de torche de soudage MIG/MAG (2).

11. Poignée de torche de soudage MIG/MAG (8) selon la revendication 10, **caractérisée en ce qu'**un élément de déverrouillage (46) pour déverrouiller la fixation du corps de torche de soudage MIG/MAG (2) est prévu.

12. Poignée de torche de soudage MIG/MAG (8) selon l'une des revendications 7 à 11, **caractérisée en ce qu'**un clapet anti-retour (47) est disposé dans le troisième canal (35).

13. Poignée de torche de soudage MIG/MAG (8) selon l'une des revendications 7 à 12, **caractérisée en ce qu'**un interrupteur (48) est disposé pour établir et couper le courant de soudage (I).

14. Torche de soudage MIG/MAG (1), avec un corps de torche de soudage MIG/MAG (2) selon l'une des revendications 1 à 5 et une poignée de torche de soudage MIG/MAG (8) selon l'une des revendications 7 à 13.
